# EUROPEAN PATENT APPLICATION

(11) **EP 1 746 332 A1**
(43) Date of publication of application: **24.01.2007**
(21) Application number: 05425518.7
(22) Date of filing: 20.07.2005
(51) Int. Cl.: F16M 11/12, F16M 11/18

(54) **A support device for television cameras or film cameras**

(71) Applicant: Piumaworld S.r.l., 20133 Milano, MI (IT)
(72) Inventor: Carbonera, Claudio, 20047 Brugherio MI (IT)
(74) Representative: Cattaneo, Elisabetta

(57) **Abstract**

A support device (1) for a television camera (C) comprises a support (2) and an head (3) which is associated with the support (2) to enable the filming device (C) to perform PAN, TILT and/or ROLL movements. Advantageously, the head (3) is associated with the support (2) with the interposition of straight guide means (11) suitable for enabling the head (3) to perform a movement in a Cartesian plane, relative to the support (2).

## Description

The present invention relates to a support device for a filming device such as a film camera, a video camera, a television camera, or the like, according to the preamble to Claim 1.

For simplicity of explanation, this description is given in non-limiting manner with reference to a television camera as the filming device.

In the television or cinematographic filming field, it is normal practice to mount the television camera on a support device which allows the television camera to be moved easily during filming. This is due to the fact that the weight and size of television cameras are such as to render them difficult for the operator to move without the aid of a suitable support device.

Moreover, for television cameras which are to be operated remotely, it is essential to use devices which can move the television camera in the desired manner since the sole capability for movement of such television cameras during filming is connected with the servo motors with which the support device of the television camera is necessarily provided.

The support devices generally comprise a support proper and a "fluid"-type head which can cause the television camera to perform PAN, TILT and/or ROLL rotations. In particular:
- the PAN movement consists of a panoramic rotation about an axis perpendicular to the ground which the head can cause the television camera to perform,
- the TILT movement consists of a rotation about a first horizontal axis which the head can cause the television camera to perform, and
- the ROLL movement consists of a rotation about a second horizontal axis, perpendicular to the above-mentioned first horizontal axis, which the head can cause the television camera to perform.

The combination of the above-mentioned PAN, TILT and ROLL movements enables the television camera to be rotated in a plurality of ways during filming but has the disadvantage that it does not permit translational movements of the television camera. In this connection, it should be pointed out that translational movements are useful, for example, to impart an elliptical movement rather than a circular movement to the television camera during filming or in order to move the filming point of the television camera sideways by a predetermined distance.

Currently, translational movements of the television camera during filming are achieved by physically moving the whole support device of the television camera or otherwise by mounting the whole support device on a dolly which is movable along two tracks associated with the floor. However, the solution of moving the whole television camera manually clearly does not enable a fluid movement of the television camera to be achieved, whereas the solution of using a dolly slidable on tracks is inconvenient mainly owing to the space occupied by the dolly and owing to the time required for its installation. In fact the television or cinematographic film set is not usually fixed in a studio but is set up where it is needed when required. Moreover, it must be taken into account that movement of the television camera and of the whole support device may lead to problems owing to the inertia of the masses moved.

The problem underlying the present invention is that of devising and making available a support device for a filming device such as a television camera, a film camera, a video camera, or the like, which has structural and functional characteristics such as to satisfy the need to allow the filming device to perform translational movements, particularly in a Cartesian plane, in addition to and/or in combination with the usual PAN, TILT and/or ROLL movements, at the same time overcoming the disadvantages mentioned with reference to the prior art.

This problem is solved by a support device for a filming device such as a television camera, a film camera, a video camera or the like according to the characteristics of Claim 1.

Further characteristics and the advantages of the support device according to the present invention will become clear from the following description of a preferred embodiment thereof which is given by way of non-limiting example with reference to the appended drawings, in which:

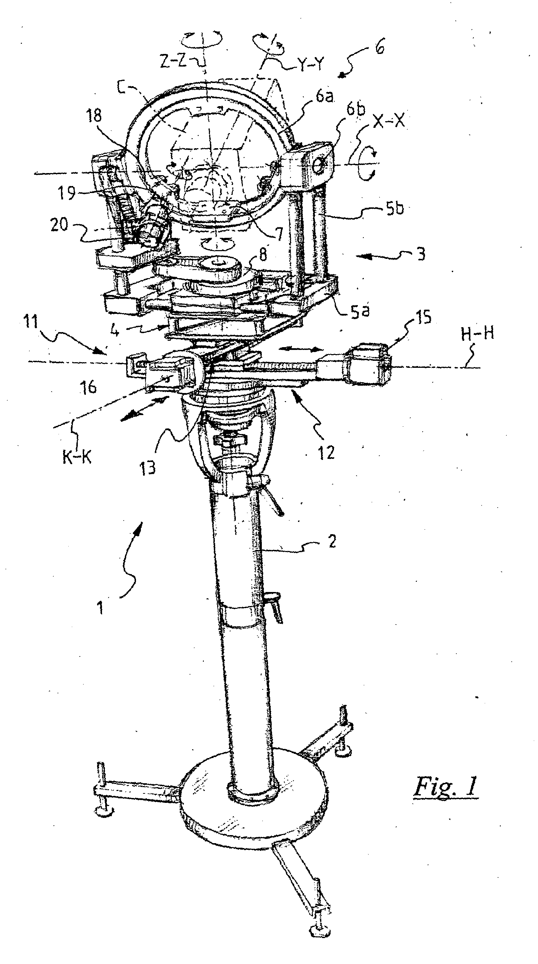

- Figure 1 is a perspective view of a support device according to the invention,

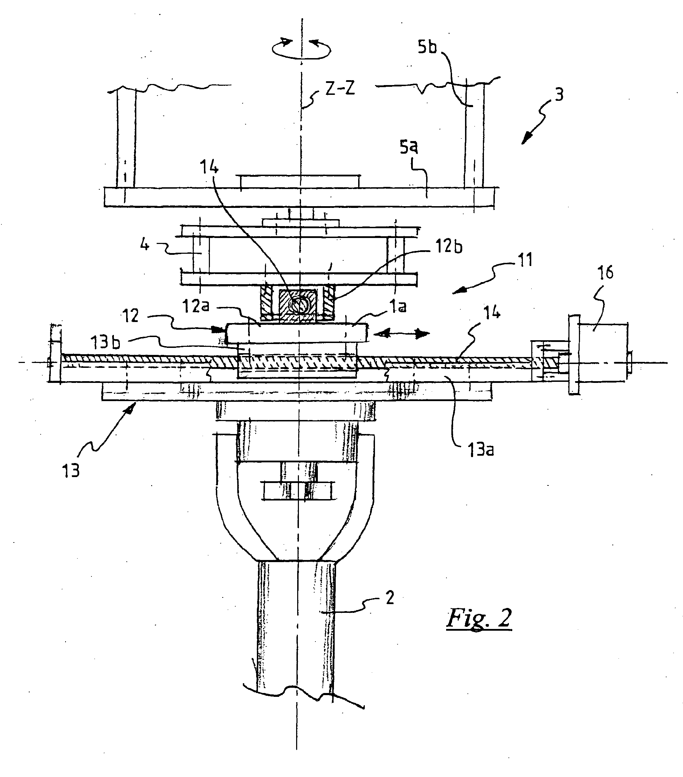

- Figure 2 is a plan view, in partial section, of a detail of the device of Figure 1 relating to the sliding guides, and

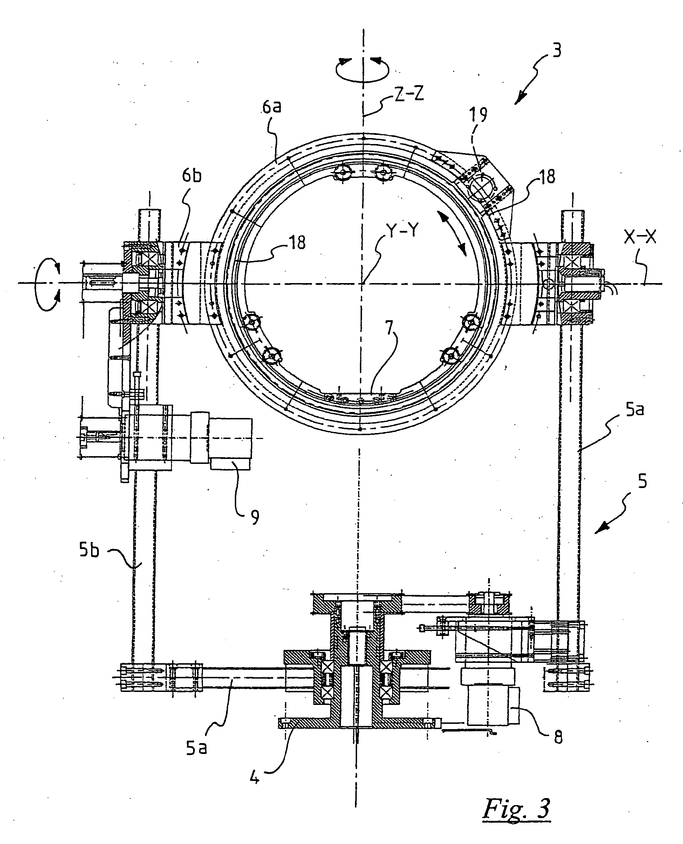

- Figure 3 is a front view of the detail of the device of Figure 1 relating to the head.

With reference to the appended drawings, a support device according to the invention, generally indicated 1, is intended for supporting a filming device C such as a television camera, a film camera, a video camera, or the like. In the embodiment described, the filming device C takes the form of a television camera.

The support device 1 comprises a support 2 and an head 3 which is associated with the support 2 to allow the television camera C to perform PAN, TILT and/or ROLL movements. In particular, the head 3 allows the television camera C to perform PAN rotational movements about a vertical axis Z-Z, TILT rotational movements about a first horizontal axis X-X, and ROLL rotational movements about a second horizontal axis Y-Y perpendicular to the first axis X-X, or a combination of these movements.

In the embodiment described, the support 2 takes the form of a pedestal which extends vertically along the above-mentioned vertical axis Z-Z and is suitable for allowing the support device 1 to rest stably on the ground.

The head 3 comprises a fixed portion 4 suitable for supporting a first movable frame 5, with the interposition of bearings or functionally equivalent elements, in a manner such that the first frame 5 can rotate about the vertical PAN axis X-X. The first frame 5 comprises a base structure 5a which extends in a plane perpendicular to the axis Z-Z and from the opposite lateral extremities of which two opposed pairs of uprights 5b extend parallel to the vertical axis Z-Z.

Moreover, the head 3 comprises a second movable frame 6 which extends between the two opposed pairs of uprights 5b in order to be supported for rotation thereby, so as to be rotatable about the first horizontal TILT axis X-X. More particularly, the second frame 6 comprises a ring structure 6a from which two opposed lateral supports 6b extend; the second frame 6 is supported on the lateral supports 6b by the opposed uprights 5b in the manner just described. The ring 6a of the frame 6 is positioned so as to be above the fixed portion 4, with reference to the vertical PAN axis Z-Z.

The internal circumference of the ring 6a is formed so as to define a sliding track for a carriage 7 to which the television camera C is firmly fixed. The carriage 7 is thus associated with the internal circumference of the ring 6a so as to be slidable along it and thus to perform the rotation about the ROLL axis Y-Y.

In view of the above-described structure of the head 3, a displacement of the carriage 7 around the internal circumference of the ring 6a leads to a rotation of the television camera C about the ROLL axis Y-Y.

There are associated with the head 3:
- drive means 8 for rotating the first movable frame 5 about the PAN axis Z-Z relative to the fixed portion 4,
- drive means 9 for rotating the second movable frame 6 about the TILT axis X-X relative to the first frame 5, and
- drive means for moving the carriage 7 along the sliding track 6a so as to bring about a rotation of the carriage 7 about the ROLL axis Z-Z; preferably, these drive means comprise a ring gear 18 which is slidably associated with the internal circumference of the ring 6a and is fixed firmly to the carriage 7 and which has an internal set of teeth meshed with a pinion 19 with which it forms a gear-and-pinion-type coupling; rotation of the ring gear 18 leads to rotation of the carriage 7 about the ROLL axis Z-Z; the pinion 19 is rotated by an electric motor 20.

The above-mentioned drive means 8 and 9 are of types known *per se* to a person skilled in the art and will not be described in detail below.

It should be pointed out that the above-described head corresponds to a preferred embodiment, but may be formed differently.

According to an advantageous aspect, the head 3 is associated with the support 2 with the interposition of guide means 11 which are suitable for enabling the head to be moved in a Cartesian plane relative to the support 2, allowing the position of the television camera C to be varied and particular movement effects to be achieved during filming.

According to the preferred embodiment shown in the drawings, the above-mentioned guide means 11 comprise a first sliding guide device 12 and a second sliding guide device 13 which are arranged transversely relative to one another. Preferably, the two above-mentioned sliding guide devices 12 and 13 are straight and are oriented so as to be perpendicular to one another to enable the head 3 to be moved in a Cartesian plane, as will become clearer from the following description. In the embodiment shown in the drawings, the Cartesian plane is a horizontal plane, that is to say, a plane perpendicular to the vertical PAN axis Z-Z.

In the embodiment described, each sliding guide device 12, 13 comprises a respective guide 12a, 13a with which a respective slide 12b, 13b is slidably associated. The guides 12a and 13a extend along respective perpendicular axes H-H and K-K. Advantageously, the slide 12b of the sliding guide device 12 can support the head 3 in a manner such as to render it fixed firmly for translation therewith relative to the guide 12a. More particularly, the slide 12b can be connected to the fixed portion 4 of the head 3 releasably, for example, by means of a connection with bolts. Moreover, the guide 12a is supported so as to be fixed firmly for translation along the axis K-K with the slide 13b of the second sliding guide device 13, whereas the respective guide 13a can be supported releasably by the support 2.

As a result, a sliding movement of the slide 12b relative to the guide 12a along the axis H-H and/or a sliding movement of the slide 13b relative to the guide 13a along the axis K-K bring about corresponding movements of the entire head 3 and of the television camera C supported thereby, in the Cartesian plane.

Each sliding guide device 12, 13 comprises respective actuator means 14 for bringing about the sliding of the slide relative to the guide along the axes H-H and K-K, respectively. The actuator means preferably comprise a threaded bar which extends along the respective guide 12a, 13a and is in threaded engagement with an internally threaded member fixed firmly to the respective slide 12b, 13b so that rotation of the threaded bar in one sense or in the other brings about a corresponding movement of the respective slide 12b, 13b in one sense or in the other along the respective guide 12a, 13a.

The support device 1 comprises drive means 15, 16 operatively associated with the actuator means 14 for bringing about the displacement of the slides 12b and 13b relative to the guides 12a, 13a. In the embodiment described, the drive means 15, 16 are electric motors suitable for rotating the threaded bars of the actuator means 14 with which they are operatively associated.

When the support device 1 is in operation, in order to bring about the displacement of the head 3 and consequently of the television camera C supported thereby along the axis H-H, it suffices to operate the motor 15. Similarly, to move the head 3 along the axis K-K it suffices to operate the motor 16.

In addition to the above-mentioned translational movements of the head 3 along the axes H-H and K-K, the head 3 can perform the usual rotational movements about the PAN axis Z-Z, the TILT axis X-X and the ROLL axis Y-Y, alone and/or in combination with one another and/or in combination with the translations along the axes H-H and K-K.

As can be appreciated from the foregoing description, the support device according to the present invention satisfies the above-mentioned need and at the same time overcomes the disadvantages referred to in the introductory portion of this description with reference to the prior art. In fact, the interposition of the above-mentioned guide means between the head and the support enables the head to perform further movements that are contained within a Cartesian plane so as to allow the position of the filming device to be varied during filming and particular filming effects to be achieved.

Another advantage of the support device according to the present invention lies in its structural simplicity.

Naturally, in order to satisfy contingent and specific requirements, a person skilled in the art will be able to apply to the above-described support device many modifications and variations all of which, however, are included within the scope of protection of the invention as defined in the appended claims.

Thus, for example, in order to satisfy specific filming requirements, the sliding guide devices may not be straight but may, for example be shaped so as to define an S, a curved line, etc. and may have different shapes from one another or may not be perpendicular. Moreover, the Cartesian plane in which the head can be moved by virtue of the presence of the above sliding guide devices may not be horizontal, that is perpendicular to the axis Z-Z, and may be oriented differently.

## Claims

1. A support device for a filming device (C) such as a television camera, a film camera or a video camera, comprising a support (2) and an head (3) associated with the support (2) to enable the filming device (C) to perform PAN, TILT and/or ROLL movements, **characterized in that** the head (3) is associated with the support (2) by the interposition of guide means (11) which can enable the head (3) to perform further movements relative to the support (2) in addition to the PAN, TILT and/or ROLL movements.

2. A device according to Claim 1, in which the guide means (11) comprise a first sliding guide device (12) which is interposed between the head (3) and the support (2) to enable the head (3) to perform a first movement relative to the support (2).

3. A device according to Claim 2, in which the guide means comprise a second sliding guide device (13) which is interposed between the first sliding guide device (12) and the support (2) to enable the head (3) to perform a second movement relative to the support (2).

4. A device according to Claim 2 or Claim 3, in which the first sliding guide device (12) is straight.

5. A device according to Claim 3, in which the second sliding guide device (13) is straight.

6. A device according to Claims 4 and 5, in which the first sliding guide device (12) and the second sliding guide device (13) enable the head (3) to be supported in a manner such that the head (3) can perform movements relative to the support (2), varying the position of the filming device (C) during filming.

7. A device according to any one of Claims 2 to 6, in which the first sliding guide device (12) comprises a guide (12a) and a slide (12b) slidingly associated with the guide (12a), the slide (12b) being suitable for supporting the head (30) to permit movement thereof along the guide (12a).

8. A device according to Claim 7, comprising actuator means (14) for bringing about the sliding of the slide (12b) along the guide (12a).

9. A device according to Claim 8, in which the actuator means (14) comprise a threaded bar which extends along the guide (12a) and is in threaded engagement with an internally threaded member fixed firmly to the slide (12b), a rotation of the threaded bar in one direction or the other relative to the guide bringing about a respective displacement of the slide (12b) in one sense or in the other relative to the guide (12a).

10. A device according to Claim 3, in which the second sliding guide device (13) comprises a guide (13a) and a slide (13b) slidably associated with the guide, the guide (12a) of the first sliding guide device (12) being supported to as to be fixed firmly for translation by the slide (13b) of the second sliding guide device (13).

11. A device according to Claim 10, comprising actuator means (14) for bringing about the sliding of the slide (13b) of the second sliding guide device (13) along the respective guide (13a).

12. A device according to Claim 11, in which the actuator means (14) for bringing about the sliding of the slide (13b) of the second sliding guide device (13) comprise a threaded bar which extends along the respective guide (13a) and is in threaded engagement with an internally threaded member fixed firmly to the respective slide (13b).

13. A device according to Claim 8 and/or Claim 11, comprising drive means (15, 16) associated with the actuator means (14) in order to move the slide (12b, 13b) along the respective guide (12a, 13a).

14. A device according to any one of Claims 1 to 13, in which the head (3) enables the filming device (C) to perform PAN, TILT and ROLL movements in combination with one another.
